# FASCICULE DE BREVET EUROPEEN

(11) **EP 1 504 887 B1**
(45) Date de publication et mention de la délivrance du brevet: **21.05.2008**
(21) Numéro de dépôt: 04291804.5
(22) Date de dépôt: 15.07.2004
(51) Int. Cl.: B32B 1/08, H01B 3/18

(54) **Cable électrique ignifugé par une gaine externe multicouche**
Mittels einer mehrschichtigen Aussenhülle gefertigtes feuerbeständiges elektrisches Kabel
Electrical cable rendered fire-proof by the use of an outer multilayered sheath

(30) Priorité: 01.08.2003 FR 0309515
(43) Date de publication de la demande: 09.02.2005
(73) Titulaire: Silec Cable, 77130 Montereau Fault Yonne (FR)
(72) Inventeur: Mammeri, Mohammed, 89100 Paron (FR); Petrus, Raymond, 77140 Moncourt Fromonville (FR); Poisson, Bernard, 89100 Sens (FR); Raoul, Gwenaelle, 45340 Auxy (FR)
(74) Mandataire: Fruchard, Guy

(56) Documents cités:
- WO-A-85/00689
- DE-A- 4 332 914
- US-A- 3 979 356
- PATENT ABSTRACTS OF JAPAN vol. 0144, no. 63 (E-0988), 8 octobre 1990 (1990-10-08) & JP 2 189809 A (HITACHI CABLE LTD), 25 juillet 1990 (1990-07-25)

## Description

La présente invention concerne un câble électrique ignifugé.

### ARRIERE PLAN DE L'INVENTION

On sait que depuis de nombreuses années il est souhaitable pour éviter des risques de propagation d'incendie, en particulier dans les lieux publics, d'ignifuger les câbles électriques.

Pour les câbles basse tension qui ont en général une structure assez simple comprenant un ou plusieurs conducteurs entourés chacun d'une couche isolante et recouverts par une gaine externe, le câble est généralement ignifugé en incorporant à la couche isolante et à la gaine externe des charges ignifuges tels que l'hydroxyde d'aluminium ou de l'hydroxyde de magnésie qui se décomposent à la chaleur en produisant de l'eau.

Compte tenu de l'augmentation de la puissance des réseaux de distribution électrique par suite de la multiplication des équipements fonctionnant à l'électricité dans les lieux publics, il est maintenant nécessaire d'amener l'électricité sous moyenne tension ou même haute tension au coeur des villes avant d'assurer la transformation en basse tension.

Il devient donc nécessaire d'assurer une ignifugation des câbles moyenne tension ou haute tension. Toutefois, l'introduction de charges ignifuges dans l'isolant des câbles diminue les caractéristiques isolantes de sorte qu'il ne peut être envisagé d'incorporer des charges ignifuges à la couche isolante de câbles moyenne tension ou haute tension. La couche isolante de ces câbles constitue donc une source de propagation d'un incendie.

Le risque de propagation d'un incendie est particulièrement élevé pour les câbles haute tension qui comportent généralement entre le conducteur et la couche isolante ainsi qu'entre l'isolant et un écran métallique de câble des couches réductrices de contraintes électriques qui comprennent essentiellement un polymère oléfinique rendu conducteur par une forte quantité de noir de carbone de sorte qu'elles constituent, avec l'isolant, un redoutable carburant en cas d'incendie.

En pratique, les câbles moyenne tension ou haute tension ne peuvent donc être ignifugés que par incorporation de charges ignifuges dans la gaine externe. Dans les câbles connus celle-ci est constituée de polymères oléfiniques, tels que l'EVA, l'EBA, l'EEA, l'EMA, l'EPR, l'EPDM, le VLDPE, qui sont utilisés soit sous forme réticulée soit sous forme thermoplastique. Les matières réticulées telles que décrites en particulier dans le document US 3 979 356 présentent l'avantage de conserver une bonne stabilité mécanique lorsqu'ils sont soumis à une source de chaleur, en raison du réseau tridimensionnel créé par la réticulation. Ces matériaux ont donc peu tendance à gonfler sous l'effet de la chaleur et restent plaqués contre la couche sous-jacente. Toutefois, en raison même de cette stabilité mécanique, les matériaux réticulés ont un faible pouvoir d'isolation thermique de sorte qu'une exposition prolongée du câble à une source de chaleur provoque rapidement la fusion de la couche isolante sous-jacente dont le poids risque de faire éclater la gaine externe de sorte qu'un liquide hautement combustible s'échappe alors du câble et provoque une propagation instantanée de l'incendie.

Au contraire, les matières thermoplastiques telles que décrites en particulier dans le document JP 2 189 809 se décomposent à la chaleur avec une forte expansion de sorte que les cendres formées après une combustion locale de la gaine thermoplastique constituent une couche épaisse de cendres qui a un important pouvoir d'isolation thermique et protège donc les couches sous-jacentes contre une élévation rapide de température. Toutefois l'expansion initiale de la couche thermoplastique réduit considérablement la stabilité mécanique de celle-ci et il existe donc un risque important de morcellement de la gaine et de chutes de fragments de celle-ci de sorte que les flammes se trouvent alors directement en contact avec les couches sous-jacentes du câble.

Il serait bien sûr possible d'atteindre un degré de protection suffisant des couches inflammables du câble en augmentant l'épaisseur de la gaine externe. Toutefois, ceci pose de problèmes de coût non seulement lors de la fabrication du câble mais également lors de sa pose en raison de l'encombrement et du poids d'un câble à gaine épaisse.

Pour éviter d'augmenter l'épaisseur de la gaine externe, on a également proposé de réaliser celle-ci sous forme de deux couches de matière thermoplastique séparées par une nappe de maintien en fibre de verre. Une telle structure entraîne toute fois une augmentation du coût de fabrication du câble. En outre, pour assurer un maintien efficace, la nappe de maintien en fibre de verre doit avoir une épaisseur suffisante qui provoque une augmentation de la raideur du câble et augmente donc les difficultés de manipulation de celui-ci.

### OBJET DE L'INVENTION

Un but de l'invention est d'ignifuger un câble électrique dont la couche isolante n'est pas ignifugée, tout en minimisant les effets secondaires de l'ignifugation.

### BREVE DESCRIPTION DE L'INVENTION

En vue de la réalisation de ce but, on propose, selon l'invention, un câble électrique ignifugé comportant au moins un conducteur central entouré d'une couche isolante elle-même entourée d'une gaine externe comportant une couche interne en matière synthétique ignifuge conservant une stabilité mécanique lorsqu'elle est soumise à une source de chaleur entraînant un ramollissement, et une couche externe en matière synthétique ignifuge en contact avec la couche interne et se décomposant selon une couche thermiquement isolante lorsqu'elle est soumise à une source de chaleur provoquant une décomposition.

Ainsi, on a constaté de façon surprenante que par rapport à une gaine homogène d'épaisseur déterminée, la structure de gaine selon l'invention permet, pour une même épaisseur totale de la gaine, d'obtenir une protection sensiblement renforcée contre l'incendie.

Selon des aspects avantageux de l'invention, la couche interne de la gaine externe est en polymère réticulé et la couche externe de la gaine externe est en polymère thermoplastique s'expansant lors de sa décomposition. Ainsi, la structure selon l'invention est obtenue en utilisant des composants connus dont le comportement lors de la fabrication du câble est bien maîtrisé.

### BREVE DESCRIPTION DES DESSINS

D'autres caractéristiques et avantages de l'invention apparaîtront à la lecture de la description qui suit d'un mode de réalisation particulier non limitatif de l'invention, en relation avec la figure unique ci-jointe qui est une vue en coupe d'un câble selon l'invention.

### DESCRIPTION DETAILLEE DE L'INVENTION

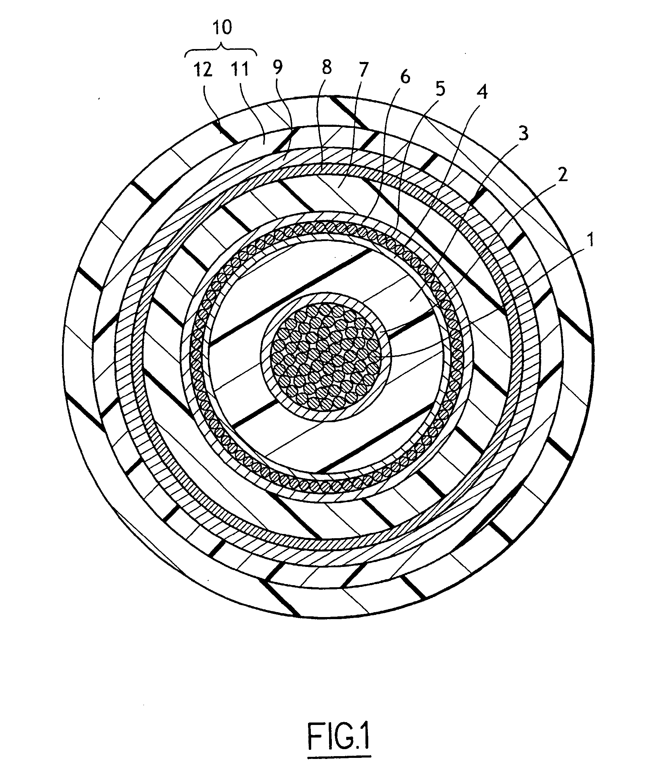

En référence à la figure 1, le câble selon l'invention a été représenté avec des épaisseurs de couches volontairement disproportionnées par rapport à la réalité pour une meilleure compréhension. Le câble illustré comporte de façon connue en soi un conducteur central 1 formé de fils de cuivre assemblés selon un toron. Le conducteur central est entouré successivement d'une couche réductrice de contraintes électriques 2, une couche isolante 3, une seconde couche réductrice de contraintes électriques 4, un second conducteur électrique 5 formé d'une nappe de fils de cuivre enroulés en hélice, une troisième couche réductrice de contraintes électriques 6, une seconde couche isolante 7, une quatrième couche réductrice de contraintes électriques 8, un écran métallique 9 formé d'un ruban de cuivre enroulé en hélice, et une gaine externe 10 en contact avec l'écran métallique 9.

Selon l'invention, la gaine externe 10 comprend une couche interne 11 en matière synthétique ignifuge conservant une stabilité mécanique lorsqu'elle est soumise à une source de chaleur entraînant un ramollissement, et une couche externe 12 en matière synthétique ignifuge en contact avec la couche interne 11 et se décomposant selon une couche thermiquement isolante lorsqu'elle est soumise à une source de chaleur provoquant une décomposition. Typiquement, la couche interne 11 est en copolymère oléfinique tels que des EVA, EBA, EEA ou EMA dans laquelle sont incorporées selon des proportions habituelles des charges ignifuges telles que des composants hydratés à base d'hydroxyde d'aluminium ou de magnésie, ou des charges susceptibles de dégager du CO2, par exemple du carbonate de magnésie, le copolymère étant réticulé après incorporation des charges ignifuges selon une technique de réticulation connue en soi telle qu'une réticulation au peroxyde, au silane ou par faisceaux d'électrons. Typiquement, la couche externe 12 a la même composition que la couche interne 11 mais n'est pas soumise à une réticulation de sorte qu'elle reste dans un état thermoplastique même après application sur le câble.

Des essais de tenue au feu ont été effectués de façon comparative avec un câble tel que défini ci-dessus et des câbles se différenciant de celui-ci seulement par la structure de la gaine externe, le câble ayant un diamètre de 42 mm, et la gaine externe ayant une épaisseur totale de 4 mm.

Un premier essai a été effectué avec un câble comportant une gaine externe homogène d'une épaisseur de 4 mm réalisée en matière thermoplastique identique à celle de la couche externe 12. Selon une norme en vigueur pour les essais de tenue au feu, six tronçons de câble ayant une longueur de 3,5 mètres ont été disposés verticalement sur une échelle de test en étant espacés de 20 mm, en regard de deux brûleurs de 20 kW à une distance de 75 mm de la nappe de câbles. Conformément à la norme, les brûleurs ont été actionnés pendant 40 min. Après 30 min, la hauteur des flammes atteignait déjà 1,5 m et à la fin de l'essai la nappe de câble était totalement détruite, la gaine externe s'étant effondrée en cours d'essai.

Un second essai a été effectué avec des tronçons de câbles analogues mais présentant une gaine externe de composition homogène en matière identique à celle de la couche interne 11 et d'une épaisseur de 4 mm. Au cours de l'essai la gaine s'est gonflée de façon modérée et est restée plaquée à l'écran, les flammes atteignant une hauteur d'environ 2 m en fin d'essai. Toutefois, après extinction des brûleurs, les câbles ont continué à brûler jusqu'à une destruction complète de la nappe de câble. Une analyse de la nappe de câble après extinction des flammes a montré que les deux couches d'isolants avaient été totalement détruites.

Un troisième essai a été effectué avec un câble comportant une gaine externe 10 conforme à l'invention comprenant une couche interne réticulée 11 ayant une épaisseur de 2,5 mm et une couche externe thermoplastique 12 ayant une épaisseur de 1,5 mm. Au cours de l'essai les flammes ont atteint une hauteur maximale de 90 cm. Lorsque les brûleurs ont été arrêtés les flammes ont immédiatement commencé à décroître pour s'éteindre après environ 15 min. Après extinction des flammes il a été constaté que le câble avait été détruit sur une hauteur de 80 cm seulement et l'isolant interne sur une hauteur de 50 cm seulement alors que selon la norme le câble est réputé avoir une résistance suffisante au feu pour une hauteur détruite allant jusqu'à 2,5 m.

Par ailleurs un essai effectué avec l'invention sur l'opacité des fumées dégagées a montré qu'en fin d'essai la transmission de lumière était supérieure à 90 % alors que selon la norme en vigueur, le câble est conforme dès l'instant où la transmission de lumière est supérieure à 60 % en fin d'essai. Le câble selon l'invention a donc des propriétés de résistance au feu très nettement supérieures aux normes en vigueur.

Bien entendu, l'invention n'est pas limitée au mode de réalisation décrit ci-dessus et on peut y apporter des variantes de réalisation sans sortir du cadre de l'invention tel que défini par les revendications.

En particulier, bien que l'invention ait été décrite en relation avec un câble comportant deux conducteurs et un écran métallique entourant la seconde couche isolante, l'invention peut être appliquée à un câble comportant un seul conducteur avec ou sans écran métallique.

Bien que l'invention ait été décrite en relation avec une gaine externe dans laquelle la couche interne a une épaisseur égale à 60 % de l'épaisseur totale de la gaine externe, on peut prévoir une répartition différente des épaisseurs des deux couches, la couche interne ayant toutefois, de préférence, une épaisseur au moins égale à la moitié de l'épaisseur totale de la gaine externe.

Bien que l'invention ait été décrite en relation avec une gaine externe comportant un polymère oléfinique incluant des charges ignifuges hydratées, on peut également réaliser l'invention avec d'autres matières synthétiques et prévoir des charges ignifuges supplémentaires telles que, et des additifs utiles lors de la fabrication, tels que des anti-oxygène, des lubrifiants, des agents de couplage, des plastifiants, ou servant à distinguer les câbles lors de l'utilisation, tels que des colorants.

## Revendications

1. Câble électrique ignifugé comportant au moins un conducteur central (1) entouré d'une couche isolante (3) elle-même entourée d'une gaine externe (10), **caractérisé en ce que** la gaine externe (10) comporte une couche interne (11) en matière synthétique ignifuge conservant une stabilité mécanique lorsqu'elle est soumise à une source de chaleur entraînant un ramollissement, et une couche externe (12) en matière synthétique ignifuge en contact avec la couche interne (11) et se décomposant selon une couche thermiquement isolante lorsqu'elle est soumise à une source de chaleur provoquant une décomposition.

2. Câble selon la revendication 1, **caractérisé en ce que** la couche interne (11) de la gaine externe (10) est en polymère réticulé.

3. Câble selon la revendication 1, **caractérisé en ce que** la couche externe (12) de la gaine externe (10) est en polymère thermoplastique s'expansant lors de sa décomposition à la chaleur.

4. Câble selon la revendication 1, **caractérisé en ce que** la couche interne (11) de la gaine externe (10) a une épaisseur au moins égale à la moitié d'une épaisseur totale de la gaine externe (10).

5. Câble selon la revendication 4, **caractérisé en ce que** la couche interne (11) de la gaine externe (10) a une épaisseur égale à 60 % de l'épaisseur totale de la gaine externe.

6. Câble selon la revendication 1, **caractérisé en ce que** le câble comporte un écran métallique (9) et **en ce que** la couche interne (11) de la gaine externe (10) est en contact avec l'écran métallique (9).

## Claims

1. A flame-resistant electric cable comprising at least one central conductor (1) surrounded by an insulating layer (3), itself surrounded by an outer sheath (10), the cable being **characterized in that** the outer sheath (10) comprises an inner layer (11) of flame-resistant synthetic material that conserves mechanical stability when it is subjected to a source of heat leading to softening, and an outer layer (12) of a flame-resistant synthetic material in contact with the inner layer (12) and decomposing into a thermally insulating layer when it is subjected to a source of heat leading to its decomposition.

2. A cable according to claim 1, **characterized in that** the inner layer (11) of the outer sheath (10) is made of cross-linked polymer.

3. A cable according to claim 1, **characterized in that** the outer layer (12) of the outer sheath (10) is made of a thermoplastic polymer that expands on being decomposed by heat.

4. A cable according to claim 1, **characterized in that** the thickness of the inner layer (11) of the outer sheath (10) is not less than half the total thickness of the outer sheath (10).

5. A cable according to claim 4, **characterized in that** the thickness of the inner layer (11) of the outer sheath (10) is equal to 60% of the total thickness of the outer sheath.

6. A cable according to claim 1, **characterized in that** the cable includes a metal shield (9) and **in that** the inner layer (11) of the outer sheath (10) is in contact with the metal shield.

## Patentansprüche

1. Feuerfestes elektrisches Kabel, umfassend mindestens einen zentralen Leiter (1), der von einer Isolierschicht (3) umgeben ist, die selbst von einem äußeren Mantel (10) umgeben ist, **dadurch gekennzeichnet, dass** der äußere Mantel (10) eine innere Schicht (11) aus feuerfestem synthetischem Material umfasst, die eine mechanische Stabilität beibehält, wenn sie einer Wärmequelle ausgesetzt wird, die ein Weichwerden mit sich bringt, sowie eine äußere Schicht (12) aus feuerfestem synthetischem Material, die mit der inneren Schicht (11) in Kontakt steht und sich zu einer Wärmeisolierschicht zersetzt, wenn sie einer Wärmequelle ausgesetzt wird, die eine Zersetzung bewirkt.

2. Kabel nach Anspruch 1, **dadurch gekennzeichnet, dass** die innere Schicht (11) des äußeren Mantels (10) aus vernetztem Polymer ist.

3. Kabel nach Anspruch 1, **dadurch gekennzeichnet, dass** die äußere Schicht (12) des äußeren Mantels (10) aus thermoplastischem Polymer ist, das sich während seiner Zersetzung bei Wärme ausdehnt.

4. Kabel nach Anspruch 1, **dadurch gekennzeichnet, dass** die innere Schicht (11) des äußeren Mantels (10) eine Dicke hat, die mindestens gleich der Hälfte einer Gesamtdicke des äußeren Mantels (10) ist.

5. Kabel nach Anspruch 4, **dadurch gekennzeichnet, dass** die innere Schicht (11) des äußeren Mantels (10) eine Dicke hat, die gleich 60% der Gesamtdicke des äußeren Mantels ist.

6. Kabel nach Anspruch 1, **dadurch gekennzeichnet, dass** das Kabel eine metallene Abschirmung (9) umfasst und dass die innere Schicht (11) des äußeren Mantels (10) mit der metallenen Abschirmung (9) in Kontakt steht.
